# EUROPÄISCHE PATENTSCHRIFT

(11) **EP 2 060 354 B1**
(45) Veröffentlichungstag und Bekanntmachung des Hinweises auf die Patenterteilung: **15.02.2017**
(21) Anmeldenummer: 08017730.6
(22) Anmeldetag: 09.10.2008
(51) Int. Cl.: B23D 61/12, B23D 65/00

(54) **Sägeblatt für eine Handsäge und Verfahren zu seiner Herstellung**
Saw blade for a hand saw and method for producing same
Lame de scie pour une scie manuelle et son procédé de fabrication

(30) Priorität: 16.11.2007 DE 102007054799
(43) Veröffentlichungstag der Anmeldung: 20.05.2009
(73) Patentinhaber: Irwin Industrial Tool Company, Huntersville, NC 28078 (US)
(72) Erfinder: Pedersen, Hans, 7760 Hurup (DK); Field, Robert, 81679 München (DE); Geier, Manfred, 82178 Puchheim (DE); Metcalfe, Nick, 81249 München (DE)
(74) Vertreter: Schmid, Nils T.F.

(56) Entgegenhaltungen:
- EP-A1- 1 332 822
- DE-A1- 1 503 962
- GB-A- 437 372
- US-A- 1 445 972
- US-A- 1 535 096
- US-A- 2 804 110
- US-A- 3 946 778
- US-A1- 2004 016 132

## Beschreibung

Die Erfindung betrifft ein Sägeblatt für eine manuell zu bedienende Säge. Aus US1445972 ist ein Sägeblatt gemäß dem Oberbegriff des Anspruchs 1 bekannt.

Derartige Handsägen haben üblicherweise einen Betätigungsgriff, an dem ein Sägeblatt befestigt ist. Zum Sägen ergreift eine Bedienperson den Betätigungsgriff und zieht und drückt das Sägeblatt gegen den zu sägenden Werkstück.

Üblicherweise ist das Sägeblatt durch einen Blattkörper im wesentlichen konstanter Querschnittstärke sowie durch wenigstens einen Sägelängsrand definiert, der an einem Längsrand des Blattkörpers eine Reihe hintereinander angeordnete Sägezähne bildet.

Es ist bekannt, dass beim tiefen Eindringen des Sägeblattes konstanter Querschnittsstärke in dem Werkstoff sich die Reibung an den glatten Seiten des Sägeblatts vergrößert. Das Blatt würde heiß laufen und unter Umständen mit dem Werkstück verklemmen. Damit das Blatt "freischneidet", d.h. die Schnittfuge im Werkstück soll geringfügig größer als die Querschnittsstärke des Blattkörpers sein, sind die Zähne geschränkt, d.h. einige Zähne sind abwechselnd nach rechts und links seitlich ausgebogen (wie in der schematischen Stirnschnittansicht gemäß beiliegender Figur A ersichtlich ist) und erzeugen dadurch die Mehrwegnahme von Material zum Schaffen der breiten Schnittfuge, oder die Sägezahnreihe verläuft in einer Wellenform. Ein Hochleistungssägeblatt mit erhöhter Schnittwirkung und beidseitig verschränkter Zähne ist aus DE 197 10 962 A1 bekannt. Um die Schnittzähnezahl zu erhöhen, werden zwei Teilsägeblätter durch mittiges Umfalzen eines an beiden Längsseiten mit einer Zahnreihe versehenen Blattkörpers übereinander gebracht. Dieses doppellagige Sägeblatt hat den ergonomischen Nachteil eines erhöhten Gewichts, wobei erhöhte Fertigungskosten aufgrund des hohen Materialeinsatzes zu erwarten sind.

Eine Schränkung oder Wellung der Sägezahnreihe führt zu einer ungleichmäßigen Krafteinsatzverteilung längs der Sägezahnreihe, je nachdem ob der im Eingriff befindliche Sägezahn stark oder weniger stark ausgebogen ist. Bei von der Anmelderin vorgenommenen Untersuchungen zeigte sich, dass sich der Grad des Herausbiegens von geschränkten Zähnen von Zahn zu Zahn ein und derselben Zahnreihe sehr stark unterscheidet. Es wurde festgestellt, dass dies auch ein Grund dafür ist, dass die Sägeeffektivität von Sägeblatt zu Sägeblatt gleichen Typs unterschiedlich sein kann.

Aus JP 59053119 ist ein Sägeblattkörper bekannt, dessen Längsrandabschnitte eine größere Stärke aufweisen als ein Mittelbereich. Diese Querschnittseinschnürung im Mittelbereich des Sägeblatts wird durch Kaltwalzen oder Fräsen verwirklicht. Auch diese bekannte Sägeblattausführung hat den Nachteil eines hohen Sägeblattgewichts und eines hohen Materialaufwands, was erhöhten Fertigungskosten führen kann.

Weitere Sägeblätter für Handsägen sind aus US 1,445,972 A1, US 2,804,110 A1, US 1,535,096 A1 und US 3,946,778 A1 bekannt.

US 2004/016132 A1 und GB 437 372 A offenbaren Fertigungsverfahren für Verbundmetallsägeblätter.

Es ist Aufgabe der Erfindung, die Nachteile des Stands der Technik zu überwinden, insbesondere ein günstig herstellbares Sägeblatt für eine ergonomische Handsäge bereitzustellen, das leichtgewichtig ist und ein gleichmäßigerer Krafteinsatz längs des Sägeblatts gewährleistet.

Diese Aufgabe wird durch die Merkmale von Anspruch 1 gelöst. Danach ist das Sägeblatt für eine Handsäge mit einem Blattkörper im wesentlichen konstanter Querschnittsstärke und wenigstens einem Sägelängsrand, an dem eine Reihe hintereinander angeordneter Sägezähne ausgebildet sind, vorgesehen, wobei der Sägelängsrand mit einer größeren, insbesondere deutlich größeren Querschnittsstärke als der Blattkörper gebildet ist, indem der den Sägelängsrand bildende Blattkörperrand randnah umgefalzt ist. Es sei klar, dass die Falzlinie sich im Wesentlichen parallel zum Längsrand des Blattkörpers erstreckt und derart nach an dem Längsrand angeordnet ist, dass der umgefalzte Randabschnitt nur zu einem geringen Teil (weniger als 10 %) den Blattkörper überlappt. Unter geringfügig können beispielsweise wenige Millimeter bis zu 1, 2, 3 oder 4 cm verstanden sein. Der kleine den Blattkörper überlappende Umfalzabschnitt soll sich in Längsrichtung des Blattkörpers in einer kontinuierlichen Breite erstrecken. Der Großteil des Blattkörpers bleibt von der Umfalzung unüberlappt.

Bei einer bevorzugten Ausführung der Erfindung ist die Querschnittsstärke des Sägelängsrands um mindestens 50% größer als eine konstante Querschnittsstärke des Blattkörpers gebildet, insbesondere doppelt so groß ausgeführt.

Bei einer bevorzugten Ausführung der Erfindung ist der Übergang zwischen dem Sägeblatt und dem Sägelängsrand stufenartig ausgebildet. Bei der Betrachtung entgegen einer Erstreckungsrichtung der Sägezähne ist insofern ein insbesondere absatzartiger Hinterschnitt gebildet. Vorzugsweise ist ein Hinterschnitt jeweils auf beiden Seiten des Sägeblatts ausgebildet.

Bei einer bevorzugten Ausführung der Erfindung ist der Sägelängsrand zumindest teilweise durch ein an dem Blattkörper befestigtes, insbesondere geschweißtes, Langteil insbesondere aus einem Hartmetall gebildet.

Bei einer Weiterbildung der Erfindung ist der Sägelängsrand vollständig durch ein an dem Blattkörper befestigtes, insbesondere geschweißtes Langteil gebildet. Vorzugsweise ist das Langteil aus einem Voll- oder Hohlmaterial geformt, in das die Sägezahnreihe durch Materialwegnahmen, insbesondere Fräsen, eingearbeitet ist.

Bei einer bevorzugten Weiterbildung der Erfindung ist ein Teil des Sägelängsrands durch einen Längsrandabschnitt des Blattkörpers und ein weiterer Teil des Sägelängsrands durch ein seitlich an den Längsrandabschnitt des Blattkörpers befestigtes, insbesondere geschweißtes, Langteil gebildet. Auf diese Weise wird die Stärke des Sägelängsrands über die Summe der Stärken des Längsrandsabschnitts und des Langteils gebildet. Die Sägezahnreihe wird anschließend durch Materialabspanung, insbesondere Fräsen, durch den Längsrandabschnitt und das Langteil hindurch eingearbeitet. Um einen Versatz durch das angeschweißte Langteil auszugleichen, kann der Randabschnitt des Blattkörpers seitlich versetzt S-förmig ausgebogen sein.

Bei einer bevorzugten Ausführung der Erfindung mittels Umfalzung des Blattkörperrands ist der umzufalzende Längsrandabschnitt seitlich versetzt aus einer durch den Blattkörper definierten Ebene herausgebogen, wobei sich der Längsrandabschnitt im wesentlichen parallel zum Blattkörper erstreckt. Die Falzlinie liegt aufgrund des seitlichen Versatzes des Längsabschnitts der Umfalzung im Wesentlichen auf einer gedachten Elementverlängerung einer Mittelebene, die durch den Blattkörper definiert ist. Auf diese Weise ist gewährleistet, dass beide Längsrandabschnitte der Umfalzung gleichmäßig versetzt zur Seitenfläche des Sägeblatts vorragen, dass heißt, der durch die Umfalzung geschaffene breitere Endrand liegt mittig zur Mittelebene des Blattkörpers. Auf diese Weise ist ein gleich dimensionierter Hinterschnitt auf beiden Seiten des Sägeblatt durch die Umfalzung des Blattkörperrands gebildet.

Am dem einstückigen Übergang zwischen dem Blattkörper und dem dem Blattkörper zugewandten Längsrandabschnitt der Umfalzung kann ein S-förmiger Biegebereich gebildet sein. Vorzugsweise entspricht der seitliche Biegeversatz zwischen dem Blattkörper und dem dem Blattkörper zugewandten Längsrandabschnitt der Umfalzung etwa einer Hälfte der konstanten Stärke des Blattkörpers. Der den dem Blattkörper zugewandte Längsrandabschnitt der Umfalzung überlappende Längsrandabschnitt erstreckt sich hin zum unverformten Blattkörper vorzugweise gerade bis zum S-förmigen Biegebereich. Vorzugweise überlappt der Längsendrandabschnitt den dem Blattkörper zugewandten Längsrandabschnitt der Umfalzung nur teilweise.

Bei einer bevorzugten Ausführung der Erfindung ist ein dem Sägelängsrand gegenüberliegender Längsrand des Sägeblatts umgefalzt. Auf diese Weise kann die Steifigkeit des Sägeblatts deutlich verbessert werden.

Bei einer bevorzugten Ausführung der Erfindung sind die Sägezähne ungeschränkt, also gegenüber eine durch den Blattkörper definierten Ebene ungebogen. Dabei können sich die Außenseiten sämtlicher Sägezähne im wesentlichen parallel zu der durch den Blattkörper definierten Ebene erstrecken. Die beiden zueinander parallelen Außenseiten der Sägezähne sind vorzugsweise mit dem gleichen seitlichen Versatz zu den Außenseiten des Blattkörpers angeordnet sind.

Des weiteren betrifft die Erfindung ein Verfahren zur Herstellung eines insbesondere oben definierten Sägeblatts für eine Handsäge, bei dem ein Blattkörper des Sägeblatts im Bereich dessen Sägelängsrands durch ein Langteil verstärkt wird, indem an dem Längsrand an einem freien Längsrand des Blattkörpers das zusätzliche Langteil befestigt, insbesondere angeschweißt, wird. Das Langteil weist eine größere Stärke als der Blattkörper insbesondere im Wesentlichen konstanter Stärke auf. Alternativ wird der Blattkörper im Bereich dessen Längsrand umgefalzt. Erfindungsgemäß wird die Sägezahnreihe der verstärkte oder umgefalzte Sägelängsrand mittels Materialabspanung eingebracht.

Vorzugsweise werden nach der Materialwegnahme die Sägezähne nicht geschränkt oder nach außen gebogen.

Bei einer bevorzugten Ausführung des erfindungsgemäßen Verfahrens werden der Blattkörper und das Langteil als Endlosteile aneinander befestigt und zur Bildung des Sägeblatts gemeinsam abgelängt.

Mit der erfindungsgemäßen Maßnahme der Verstärkung des Sägelängsrands mittels der schmalen Umfalzung des Blattkörperrands wird die Gesamtsteifigkeit des Sägeblatts deutlich verbessert, weil sich die Verstärkung längs des gesamten Sägelängsrands erstreckt. Gleichzeitig kann ein deutlich dünneren Blattkörper eingesetzt werden, was die Handsäge leichter macht und dessen Ergonomie verbessert. Zudem wird mit der einfachen Maßannahme der Verstärkung des Längsrands ein Freischnitt für das Sägeblatt bereitgestellt, ohne das komplizierte und ungenaue Schränkungsverfahren an den Zähnen einsetzen zu müssen. Mit dem erfindungsgemäßen Sägeblatt und dessen einfachen und ökonomischen Herstellung können Handsägen mit einer äußerst gleichmäßigen Sägeeffektivität bereitgestellt werden.

Weitere Eigenschaften, Vorteile und Merkmale der Erfindung werden durch die folgende Beschreibung bevorzugter Ausführungen beschrieben, in denen zeigen:
- Fig. 1: eine schematische Stirnschnittansicht eines Sägeblatts ohne erfindungsgemäße Umfalzung in einer ersten Ausführung;
- Fig. 2: eine schematische Stirnschnittansicht eines Sägeblatts ohne erfindungsgemäße Umfalzung in einer zweiten Ausführung;
- Fig. 3: eine schematische Stirnschnittansicht eines Sägeblatts ohne erfindungsgemäße Umfalzung in einer dritten Ausführung;
- Fig. 4: eine schematische Stirnschnittansicht eines Sägeblatts ohne erfindungsgemäße Umfalzung in einer vierten Ausführung;
- Fig. 5: eine schematische Stirnschnittansicht eines Sägeblatts ohne erfindungsgemäße Umfalzung in einer fünften Ausführung;
- Fig. 6: eine schematische Stirnschnittansicht eines erfindungsgemäßen Sägeblatts; und
- Fig. 7: eine schematische Stirnschnittansicht eines Zwischenprodukts des Sägeblatts bei dessen Herstellung.

Bevor auf die erfindungsgemäßen Ausführungen eingegangen wird, soll auf eine bekannte geschränkte Zahnreihe anhand der beiliegenden Figur A Bezug genommen werden, die eine schematische Stirnschnittansicht eines bekannten Sägeblatts zeigt. Wie in Figur A ersichtlich ist, hat das Sägeblatt eine Reihe hintereinander angeordneter Sägezähne (nur vier ersichtlich), wobei ein Sägezahn nach seitlich links und seitlich rechts ausgebogen wird, um die Schränkung zu schaffen, welches ein Freischneiden des Sägeblatts für ein tiefes Eindringen des Sägeblatts leisten soll.

Bei der Herstellung des erfindungsgemäßen Sägeblatts ist es schwierig, den Grad des Schränkens genau festzulegen. Auch bei sehr sorgfältigem Schränken werden unterschiedlich große Schränkungsamplituden a erreicht.

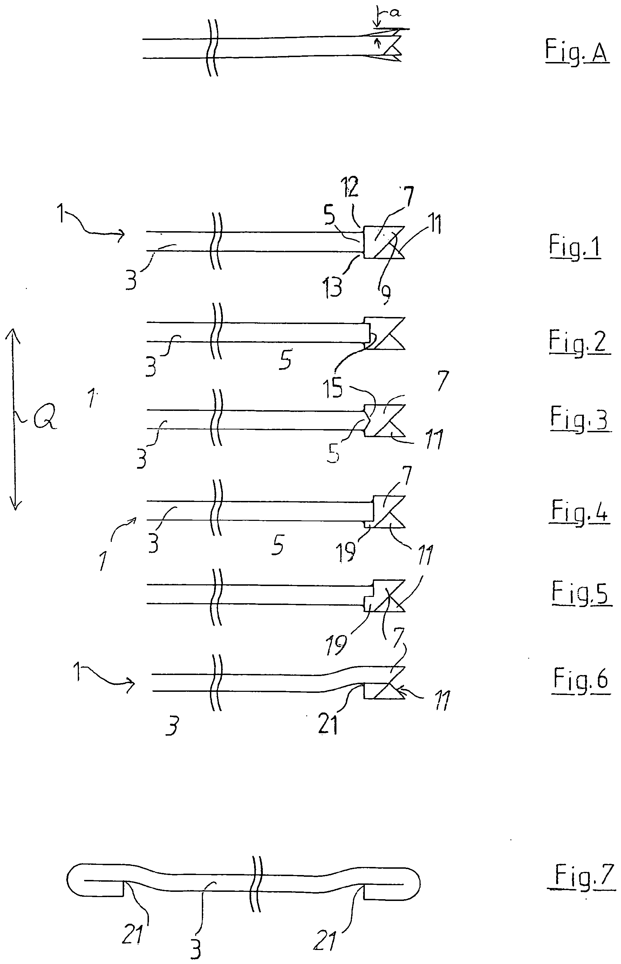

In Figur 1 ist ein Sägeblatt ohne erfindungsgemäße Umfalzung schematisch in gleicher Sichtweise wie in Figur A dargestellt und im Allgemeinen mit der Bezugsziffer 1 versehen.

Das Sägeblatt 1 umfasst einen Blattkörper 3, an dessen freien Stirnrand 5 ein als Endlosband ausgebildetes, separates Langteil oder Vollstreifen 7 angeschweißt ist. In Figur 1 ist ein vornliegender Zahn 9 und ein teilweise verdeckt dahinter liegender Zahn 11 gezeigt, dessen freie Schnittstirninnenseiten angeschrägt sind. Wie in Figur 1 ersichtlich ist, umfasst die gesamte Sägezahnreihe keinen nach außen gebogenen Sägezahn zur Bildung einer Schränkung.

Vielmehr ist im Übergangsbereich zwischen dem Vollstreifen 7 und dem Blattkörper 3 beidseitig ein Hinterschnitt 11, 13 gebildet, der als Freiraum für ein Freiliegen des Sägeblatts bei einem tiefen Schnitt dient, während sich die freien, glatten Außenseiten der Zähne 9, 11 parallel zur Blattkörperebene erstrecken.

In den nun folgenden Ausführungen wird zur besseren Lesbarkeit der Figurenbeschreibung dieselben Bezugszeichen für die identischen oder ähnlichen Bestandteile des Sägeblatts gemäß Figur 1 verwendet.

In Figur 2 ist der Stirnrand 5 des Blattkörpers 3 in eine formkomplementäre Aussparung 15 in dem Vollstreifen 7 eingesetzt, um eine formflüssige Verbindung zwischen dem Vollstreifen und dem Blattkörper 3 zu realisieren. Bei einer derartigen Ausführung können neben Schweiß- auch Klebverbindungen herangezogen werden.

Die in Figur 3 gezeigte Variante unterscheidet sich von der nach Figur 2 dadurch, dass der Stirnrand 5 des Blattkörpers 3 angeschrägt ist, um eine Art pfeilartige Kopplungsspitze zu bilden.

In der Figur 4 dargestellten Ausführung hat der Vollstreifen 7 eine einseitige Aufnahme für den Blattkörper 3. Mit einem Vorsprung 19 wird die genaue Position des Blattkörpers 3 relativ zum Vollstreifen 7 in einer Querrichtung Q festgelegt, um anschließend einen Schweißvorgang zu beginnen.

Die Ausführung gemäß Figur 5 unterscheidet sich von der nach Figur 4 darin, dass der seitliche Vorsprung stärker ausgebildet ist und sich einseitig im wesentlichen zur Querschnittsstärkenmitte erstreckt.

Die Variante gemäß Figur 6 ist eine besonders bevorzugte Ausführung, bei der die Verstärkung des Sägelängsrands des Sägeblatts 1 durch Umfalzen gebildet ist, wie in Figur 7 angedeutet ist. Beim Umfalzen wird ein Längsrandabschnitt des Blattkörpers 3 um 180° zur Bildung einer U-Form umgefalzt und zurückgebogen und anschließend an dem sich bildenden Anlageschlitz 21 laser- oder induktionsgeschweißt. Der umgefalzte Längsrand 23 ist aus einer durch den Blattkörper 3 gebildeten Ebene um eine halbe Blattkörperstärke nach außen versetzt, wobei sich der Sägelängsrand im wesentlichen parallel zum Blattkörper 3 erstreckt und der gebogene Übergangsbereich S-förmig gebildet ist.

Anschließend wird die gewünschte Verzahnung ohne Schränkung in den umgefalzten Sägelängsrand eingefräst.

In Figur 7 ist eine schematische Ansicht eines Zwischenprodukts des erfindungsgemäßen Herstellungsverfahrens zur Schaffung des Sägeblatts 1 dargestellt. Wir ersichtlicht ist, ist der Blattkörper 3 an seinen beiden Längsseiten randnah umgefalzt, wobei die sich parallel zum Längsrand des unverformten Sägeblattkörpers erstreckende Falzlinie in unmittelbarer Nachbarschaft zum Längsrand befindet, damit nur eine schmale Randüberlappung von höchstens 10 % des Blattkörpers 3 entsteht. Damit ist die Festigkeit des Blattkörpers 3 deutlich verbessert. Anschließend können beide Sägelängsränder mit der gewünschten Verzahnung versehen werden. Dabei können sogar beide Längsränder verzahnt werden, ohne dass Einbußen hinsichtlich der Festigkeit hingenommen werden müssen. Zudem brauchte die Bedienperson die Sägelängsränder einfach nur wenden, um eine andere Sägezahnreihe zu einzusetzen, ohne die Handsäge wechseln zu müssen.

### Bezugszeichenliste

- 1: Sägeblatt
- 3: Blattkörper
- 5: freier Stirnrand
- 7: Vollstreifen
- 9: Zahn
- 11: Zahn
- 12, 13: Hinterschnitt
- 15: Aussparung
- 19: Vorsprung
- 21: Anlageschlitz
- 23: umgefalzter Längsrand
- a: Schränkungsamplitude
- Q: Querrichtung

## Patentansprüche

1. Sägeblatt für eine Handsäge mit einem Blattkörper (3) im wesentlichen konstanter Querschnittsstärke und wenigstens einem Sägelängsrand, an dem eine Reihe hintereinander angeordnete Sägezähne ausgebildet sind, **dadurch gekennzeichnet, dass** der Sägelängsrand mit einer größeren Querschnittsstärke als der Blattkörper (3) durch eine Umfalzung im Bereich eines Blattkörperrands gebildet ist.

2. Sägeblatt nach Anspruch 1, **dadurch gekennzeichnet, dass** im Bereich eines Übergangs zwischen dem Blattkörper (3) und dem Sägelängsrand bei einer Betrachtung entgegen einer Erstreckungsrichtung der Sägezähne (9, 11) einer insbesondere absatzartiger Hinterschnitt (12, 13) gebildet ist.

3. Sägeblatt nach Anspruch 1 oder 2, **dadurch gekennzeichnet, dass** der Hinterschnitt (12, 13) jeweils auf beiden Flachseiten des Sägeblatts ausgebildet ist.

4. Sägeblatt nach Anspruch 1 bis 3, **dadurch gekennzeichnet, dass** der Sägelängsrand zumindest teilweise durch ein an dem Blattkörper (3) befestigtes, insbesondere geschweißtes, Langteil (7) gebildet ist.

5. Sägeblatt nach einem der Ansprüche 1 bis 4, **dadurch gekennzeichnet, dass** der Sägelängsrand vollständig durch ein an dem Blattkörper befestigtes, insbesondere geschweißtes, Langteil gebildet ist, das aus einem Vollmaterial gebildet ist, in das die Sägezahnreihe durch Materialabspanen, insbesondere Fräsen, Schleifen oder Stanzen, eingearbeitet ist.

6. Sägeblatt nach einem der Ansprüche 1 bis 5, **dadurch gekennzeichnet, dass** ein Teil des Sägelängsrands durch einen Längsrandabschnitt des Blattkörpers (3) und ein weiterer Teil des Sägelängsrands durch ein seitlich an dem Längsrandabschnitt des Blattkörpers (3) befestigtes, insbesondere geschweißtes, Langteil (7) gebildet sind, so dass die Stärke des Sägelängsrands durch die Summe der Stärken des Längsrandabschnitts und des Langteils (7) gebildet ist, wobei die Sägezahnreihe durch Materialabspanen, insbesondere Fräsen, Schleifen oder Stanzen, durch den Längsrandabschnitt und das Langteil (7) eingearbeitet ist.

7. Sägeblatt nach einem der Ansprüche 1 bis 6 , **dadurch gekennzeichnet, dass** der insbesondere umgefalzte Längsrandabschnitt des Blattkörpers (3) versetzt zu einer durch den Blattkörper (3) definierten Ebene gebogen ist und sich im wesentlichen parallel zum Blattkörper (3) erstreckt.

8. Sägeblatt nach Anspruch 7, **dadurch gekennzeichnet, dass** ein Biegebereich zwischen dem Blattkörper (3) und dem Längsrandabschnitt S-förmig ist.

9. Sägeblatt nach Anspruch 7 oder 8, **dadurch gekennzeichnet, dass** ein Biegeversatz zwischen dem Blattkörper (3) und dem Längsrandabschnitt etwa einer Hälfte der Stärke des Blattkörpers (3) entspricht.

10. Sägeblatt nach einem der Ansprüche 1 bis 9, **dadurch gekennzeichnet, dass** ein dem Sägelängsrand gegenüberliegender Längsrand des Sägeblatts (1) umgefalzt ist.

11. Sägeblatt nach einem der Ansprüche 1 bis 10, **dadurch gekennzeichnet, dass** die Sägezähne (9, 11) ungeschränkt oder gegenüber einer durch den Blattkörper (3) definierten Ebene ungebogen sind.

12. Sägeblatt nach einem der Ansprüche 1 bis 11, **dadurch gekennzeichnet, dass** Außenseiten sämtlicher Sägezähne (9, 11) im wesentlichen parallel zur durch den Blattkörper (3) definierten Ebene liegen.

13. Sägeblatt nach einem der Ansprüche 1 bis 12, **dadurch gekennzeichnet, dass** das Langteil (7) oder das Ansatzlängsstück aus einem härteren Material als der Blattkörper (3) gebildet ist.

14. Verfahren zum Herstellen eines insbesondere nach einem der Ansprüche 1 bis 13 ausgebildeten Sägeblatts (1) für eine Handsäge, bei dem:
- ein Blattkörper (3) des Sägeblatts (1) im Bereich dessen Längsrands umgefalzt wird; und
- der umgefalzte Sägelängsrand zur Bildung einer Sägezahnreihe mittels Materialwegnahme bearbeitet wird.

15. Verfahren nach Anspruch 14, bei dem nach der Materialabspannung die Sägezähne nicht geschränkt oder nach außen gebogen werden.

16. Verfahren nach Anspruch 14 oder 15, bei dem der Blattkörper (3) und das Langteil (7) als Endlosteile aneinander befestigt werden und zur Bildung des Sägeblatts (1) gemeinsam abgelängt werden.

## Claims

1. Saw blade for a hand saw, having a blade body (3) of substantially constant cross-sectional thickness and at least one lengthwise saw edge, on which a row of saw teeth are arranged one behind the other,
**characterized in that**
the lengthwise saw edge is formed with a larger cross-sectional thickness than the blade body (3) by a fold in the region of a blade body edge or by a lengthwise attachment (7) which is fixed, in particular welded, to the blade body edge.

2. Saw blade according to Claim 1,
**characterized in that**
in the region of a transition between the blade body (3) and the lengthwise saw edge, when viewed along an extension direction of the saw teeth (9, 11), an undercut (12, 13) is formed, in particular in the shape of a shoulder.

3. Saw blade according to Claim 1 or 2,
**characterized in that**
the undercut (12, 13) is formed on each of the two flat sides of the saw blade.

4. Saw blade according to Claims 1 to 3,
**characterized in that**
the lengthwise saw edge is formed at least partly by a lengthwise part (7) which is fixed, in particular welded, to the blade body (3).

5. Saw blade according to any one of Claims 1 to 4,
**characterized in that**
the lengthwise saw edge is formed completely by a lengthwise part which is fixed, in particular welded, to the blade body, said lengthwise part being formed from a solid material into which the row of saw teeth is incorporated by material removal, in particular milling, grinding or punching.

6. Saw blade according to any one of Claims 1 to 5,
**characterized in that**
a part of the lengthwise saw edge is formed by a lengthwise edge section of the blade body (3) and a further part of the lengthwise saw edge by a lengthwise part (7) which is laterally fixed, in particular welded, to the lengthwise edge section of the blade body (3), so that the thickness of the lengthwise saw edge is formed by the sum of the thicknesses of the lengthwise edge section and of the lengthwise part (7), wherein the row of saw teeth is incorporated by material removal, in particular milling, grinding or punching, through the lengthwise edge section and the lengthwise part (7).

7. Saw blade according to any one of Claims 1 to 6,
**characterized in that**
the lengthwise edge section, which is in particular folded, of the blade body (3), is bent offset with respect to a plane defined by the blade body (3) and extends substantially parallel to the blade body (3).

8. Saw blade according to Claim 7,
**characterized in that**
a bending region between the blade body (3) and the lengthwise edge section is S-shaped.

9. Saw blade according to Claim 7 or 8,
**characterized in that**
a bend offset between the blade body (3) and the lengthwise edge section is equal to approximately half of the thickness of the blade body (3).

10. Saw blade according to any one of Claims 1 to 9,
**characterized in that**
a longitudinal edge of the saw blade (1) opposite the lengthwise saw edge is folded.

11. Saw blade according to any one of Claims 1 to 10,
**characterized in that**
the saw teeth (9, 11) are not set cross-wise or bent with respect to a plane defined by the blade body (3).

12. Saw blade according to any one of Claims 1 to 11,
**characterized in that**
outer sides of all the saw teeth (9, 11) are substantially parallel to the plane defined by the blade body (3).

13. Saw blade according to any one of Claims 1 to 12,
**characterized in that**
the lengthwise part (7) or the lengthwise attachment is formed from a harder material than the blade body (3).

14. Method for producing a saw blade (1), designed in particular according to any of Claims 1 to 13, for a hand saw, in which:
- a blade body (3) of the saw blade (1) is reinforced in the region of the lengthwise saw edge thereof by a lengthwise part (7); and
- the folded lengthwise saw edge is machined by means of material removal to form a row of saw teeth.

15. Method according to Claim 14, in which following the material removal the saw teeth are not set cross-wise or bent outwards.

16. Method according to Claim 14 or 15, in which the blade body (3) and the lengthwise part (7) are fixed together as continuous parts and jointly cut to length to form the saw blade (1).

## Revendications

1. Lame de scie pour une scie manuelle, avec un corps de lame (3) d'une épaisseur de section transversale sensiblement constante et au moins un bord longitudinal de scie, sur lequel sont conçues des dents de scie placées en rangée les unes derrière les autres, **caractérisée en ce que** le bord longitudinal de scie est formé avec une épaisseur de section transversale supérieure à celle du corps de lame (3) par un repliage dans la région d'un bord de corps de lame.

2. Lame de scie selon la revendication 1, **caractérisée en ce que** dans la région d'un passage entre le corps de lame (3) et le bord longitudinal de scie, lors d'une observation à l'encontre d'une direction d'extension des dents de scie (9, 11) est formée une contre-dépouille (12, 13) de type épaulement.

3. Lame de scie selon la revendication 1 ou la revendication 2, **caractérisée en ce que** la contre-dépouille (12, 13) est conçue chaque fois sur les deux côtés plats de la lame de scie.

4. Lame de scie selon la revendication 1 à 3, **caractérisée en ce que** le bord longitudinal de scie est formé au moins en partie par une pièce allongée (7) fixée, notamment soudée sur le corps de lame (3).

5. Lame de scie selon l'une quelconque des revendications 1 à 4, **caractérisée en ce que** le bord longitudinal de scie est entièrement formé par une pièce allongée fixée, notamment soudée sur le corps de lame, qui est conçue en une matière pleine, dans laquelle la rangée de dents de scie est incorporée par enlèvement de copeaux, notamment par fraisage, rectification ou estampage.

6. Lame de scie selon l'une quelconque des revendications 1 à 5, **caractérisée en ce qu'**une partie du bord longitudinal de scie est formée par un segment de bord longitudinal du corps de lame (3) et une autre partie du bord longitudinal de scie par une pièce allongée (7) fixée, notamment soudée sur le segment de bord longitudinal du corps de lame (3), de telle sorte que l'épaisseur du bord longitudinal de scie soit formée par la somme des épaisseurs du segment de bord longitudinal et de la partie allongée (7), la rangée de dents de scie étant incorporée par enlèvement de copeaux, notamment par fraisage, rectification ou estampage à travers le segment de bord longitudinal et la pièce allongée (7).

7. Lame de scie selon l'une quelconque des revendications 1 à 6, **caractérisée en ce que** le segment de bord longitudinal notamment replié du corps de lame (3) est centré en déport par rapport à un plan défini par le corps de lame (3) et s'étend sensiblement à la parallèle du corps de lame (3).

8. Lame de scie selon la revendication 7, **caractérisée en ce qu'**une région de cintrage entre le corps de lame (3) et le segment de bord longitudinal est en forme de S.

9. Lame de scie selon la revendication 7 ou la revendication 8, **caractérisée en ce qu'**un déport de cintrage entre le corps de lame (3) et le segment de bord longitudinal correspond approximativement à une moitié de l'épaisseur du corps de lame (3).

10. Lame de scie selon l'une quelconque des revendications 1 à 9, **caractérisée en ce qu'**un bord longitudinal de la lame de scie (1) qui est opposé au bord longitudinal de lame est replié.

11. Lame de scie selon l'une quelconque des revendications 1 à 10, **caractérisée en ce que** les dents de scie (9, 11) sont cintrées de manière non avoyée ou par rapport à un plan défini par le corps de lame (3).

12. Lame de scie selon l'une quelconque des revendications 1 à 11, caractérisée en ce toutes les faces extérieures de l'ensemble des dents de scie (9, 11) se situent sensiblement à la parallèle du plan défini par le corps de lame (3).

13. Lame de scie selon l'une quelconque des revendications 1 à 12, **caractérisée en ce que** la pièce allongée (7) ou la portion longitudinale rapportée est formée en une matière plus dure que celle du corps de lame (3).

14. Procédé destiné à fabriquer une lame de scie (1) conçue notamment selon l'une quelconque des revendications 1 à 13 pour une scie manuelle, lors duquel :
- on replie un corps de lame (3) de la lame de scie (1) dans la région de son bord longitudinal ; et
- on usine par enlèvement de matière le bord longitudinal de scie pour former une ranger de dents de scie.

15. Procédé selon la revendication 14, lors duquel, après l'enlèvement de copeaux de matière, on cintre les dents de scie de manière non avoyée ou vers l'extérieur.

16. Procédé selon la revendication 14 ou la revendication 15, lors duquel on fixe l'un sur l'autre le corps de lame (3) et la pièce allongée (7) en tant que pièces continues et on les sectionne en commun pour former la lame de scie (1).
